# EUROPÄISCHE PATENTSCHRIFT

(11) **EP 1 459 618 B1**
(45) Veröffentlichungstag und Bekanntmachung des Hinweises auf die Patenterteilung: **24.01.2007**
(21) Anmeldenummer: 04005055.1
(22) Anmeldetag: 04.03.2004
(51) Int. Cl.: A01F 15/08

(54) **Verfahren und Einrichtung zum Ver- und Entriegeln einer Ballenrampe**
Method and device for locking and releasing a ramp for bales
Methode et dispositif pour verrouillage et deverrouillage d'une rampe de balles

(30) Priorität: 18.03.2003 DE 10312074
(43) Veröffentlichungstag der Anmeldung: 22.09.2004
(73) Patentinhaber: Usines Claas France, 57140 St. Remy/Woippy (FR)
(72) Erfinder: Guthmann, Peter, 57000 Metz (FR); Nikolai, Thomas, 56290 Macken (DE)

(56) Entgegenhaltungen:
- EP-A- 0 258 528
- EP-A- 0 288 600
- DE-A- 3 247 661
- DE-A- 3 314 314
- US-A- 4 407 190

## Beschreibung

Die Erfindung betrifft eine Ver- und Entriegelungseinrichtung in einer landwirtschaftlichen Arbeitsmaschine - insbesondere einer Rollballenpresse - gemäß dem Oberbegriff des Anspruchs 1.
Aus der DE 33 14 314 ist eine Rollballenpresse bekannt geworden, die die Verschwenkbarkeit des hinteren Pressraumgehäuses in Abhängigkeit von dem in dem Gehäuse gewickelten Ballen regelt. Hiernach wird das hintere Pressraumgehäuse nach Fertigstellung eines Ballens um eine Achse um ein geringes Maß nach außen verschwenkt. Hierdurch erhält der Fahrer des Zugfahrzeugs ein Signal und kann das Hochschwenken des gesamten hinteren Pressraumgehäuses einleiten, so dass der Ballen aus der Rollballenpresse über die Ballenrampe herausrollen kann .
Hierbei wird die Ballenrampe durch das Eigengewicht des Ballens heruntergedrückt. Nach Abrollen des Ballens schnellt die Ballenrampe wieder in ihre Ausgangsposition zurück. Dies wird durch eine mit der Ballenrampe in Wirkverbindung stehende Zugfeder erreicht, deren Spannung entsprechend eingestellt sein muss. Nach diesem Vorgang lässt sich das hintere Pressraumgehäuse wieder herunterfahren. Demgemäss dient die offenbarte Vorrichtung der Synchronisation des Verschwenkens des hinteren Pressraumgehäuses in Abhängigkeit von dem fertiggestellten Ballen, der nach dem Verschwenken des hinteren Pressraumgehäuses über die Ballenrampe abgerollt wird.
Nachteilig an dieser Erfindung wirkt sich die Verbindung der Ballenrampe zu der Zugfeder und dem gesamten Pressraumgehäuses aus. Die Steifigkeit der Zugfeder ist auf eine feste Größe eingestellt. Im Gegensatz hierzu können die Ballen unterschiedlich groß und unterschiedlich schwer sein. Dies richtet sich nach dem jeweiligen Erntegut. Ein leichter Ballen drückt daher die Ballenrampe schwächer herunter als ein schwerer Ballen. Dies kann dazu führen, dass sehr leichte Ballen auf der Ballenrampe liegen bleiben ohne von dieser abzurollen. Wird die Spannung der Zugfedern aus diesem Grund verringert, schlägt die Ballenrampe sowohl bei Straßenfahrten als auch bei der Feldarbeiten unkontrolliert stark gegen das Pressraumgehäuse. Dies kann zu Beschädigungen an dem Pressraumgehäuse und an der Ballenrampe führen. Zudem stellt das permanente Anschlagen eine hohe Lärmbelästigung für den Fahrer dar.

Der Erfindung liegt daher die Aufgabe zugrunde, eine Rollballenpresse der eingangs beschriebenen Art demgemäss weiterzuentwickeln, dass die Rollballenrampe, ohne den Abroll- und Verschließvorgang zu beeinträchtigen, fixierbar ist.

Erfindungsgemäß wird die Aufgabe durch eine Ver- und Entriegelungseinrichtung mit den kennzeichnenden Merkmalen des Anspruchs 1 gelöst.

Indem die Verriegelung der Ballenrampe durch zumindest einen Fanghaken erfolgt sobald zumindest eine schwenkbare Klappe der Rollballenpresse geschlossen worden ist, wird die Ballenrampe an den Pressenrahmen fixiert, ohne dass die Ballenrampe bei der Weiterfahrt der Rollballenpresse an den Pressenrahmen schlagen kann. Hierdurch werden sowohl bei der Ernte- als auch der Straßenfahrt erhöhte Lärmbelästigungen ausgeschlossen, die durch das ständige Anschlagen ohne Verriegelungseinrichtung entstünden. Ebenso werden Schäden an der Ballenrampe oder dem Pressengehäuse ausgeschlossen. Zudem kann unabhängig von der Zugkraft der Rückstellfeder, die die Ballenrampe aufwärts zieht, die Verriegelung der Ballenrampe gewährleistet werden, ohne das es einer Verstellung der Federkraft bedarf.

Die Verriegelung der Ballenrampe erfolgt im unbelasteten Zustand derselben und zwar unmittelbar nach dem Abrollen des fertigen Ballens. Durch das Hochschnellen der Ballenrampe wird diese an ihrem oberen Anschlag gehalten und arretiert. Eine zeitliche Verzögerung wird damit ausgeschlossen.

Weiter erfolgt die Entriegelung der Ballenrampe in Abhängigkeit von dem Aufschwenkvorgang der schwenkbaren Klappe. Die Entriegelung erfolgt im Fall des aufgeschwenkten rückwärtigen Gehäuseteils. Dieses wird immer dann aufgeschwenkt, sobald der Ballen fertig verdichtet und gebunden ist. Da das Aufschwenken der Klappe bzw. des rückwärtigen Gehäuseteils einen fertig gepressten Ballen voraussetzt, wird durch diesen Vorgang ein synchrones Zusammenspiel zwischen dem Freigeben eines fertig gepressten Ballens und dem Abrollen des Ballens von der Ballenrampe gewährleistet.
Ebenso ist das Abrollen des Ballens nur möglich, wenn dieser die entriegelte Ballenrampe mit seinem Eigengewicht belastet. Hierdurch wird die Ballenrampe heruntergedrückt und der Ballen rollt über diese auf das Feld. Danach schwenkt die Ballenrampe wieder aufwärts, bis die Ballenrampe das nunmehr wieder geschlossene Pressraumgehäuse kontaktiert und verriegelt wird.

Indem die Verriegelung und Entriegelung der Ballenrampe selbsttätig erfolgt wird die Ballenrampe ohne von dem Fahrer kontrolliert werden zu müssen, im Bedarfsfall freigegeben oder festgestellt. Da hierdurch eine abgeschlossene Wickelung des Ballens und des sich daran anschließenden Abrollzeitpunktes des fertiggestellten Ballens zueinander genau abgestimmt wird, erfährt der Fahrer der landwirtschaftlichen Zugmaschine eine Entlastung.

Indem der Ballenrampe zumindest ein Fanghaken zugeordnet ist, der ent- und verriegelbar mit wenigstens einem Ent- und Verriegelungsmechanismus in Wirkverbindung steht, wobei ein Glied des Ent- und Verriegelungsmechanismus an die Bewegung der wenigstens einen schwenkbaren Klappe des Pressraumgehäuses gekoppelt ist, wird das Ent- und Verriegeln der Ballenrampe synchron zur Stellung der Klappe und damit zum Wickelprozess gesteuert.

Dadurch, dass der Fanghaken um eine Schwenkachse drehbar mit der Ballenrampe in Wirkverbindung steht, gegen die Wirkung einer Feder verschwenkbar ist und einenends eine Aussparung aufweist, erhält der Fanghaken hinreichend Spiel und Stabilität um beim Aufwärtsfahren mit dem Verriegelungsmechanismus eine feste Verbindung herzustellen indem der Fanghaken hinter den dort angeordneten Anschlag einrastet. Zudem wird der Fanghaken bei der Aufwärtsbewegung der Ballenrampe durch den Zug der Rückstellfeder in eine bestimmte Position gehalten die den Fanghaken in Richtung Anschlag führt. Ohne diese Feder bestünde anderenfalls die Gefahr, dass der Fanghaken an dem Anschlag vorbei fahren würde. Eine Verriegelung wäre dann nicht mehr möglich.

Indem der Entriegelungsmechanismus als Gelenksmechanismus ausgebildet ist, dessen Antriebsglied schwenkbeweglich am Pressenrahmen der Rollballenpresse angeordnet ist, wobei das Antriebsglied über ein Koppelglied gelenkig mit dem den Pressenrahmen der Rollballenpresse schwenkbeweglich angeordneten Antriebsglied verbunden ist, werden die Bewegungsabläufe der einzelnen Organe zueinander abgestimmt, so dass sich jedes einzelne Organ in Abhängigkeit zu dem hierzu in Wirkverbindung stehenden weiteren Organen optimal in die erforderliche Arbeitsstellung ausrichtet. Auf diese Weise erfolgt das Ent- und Verriegeln der Ballenrampe stets zum richtigen Zeitpunkt, also unmittelbar nach der Fertigstellung des Ballens beziehungsweise unmittelbar nach dem Abrollen des Ballens. Hierdurch wird ein ungehinderter Ernteprozess gewährleistet.
Ferner werden durch diese einfache konstruktive Ausführung kostenintensive und produktionsaufwendige hydraulische oder mechanische Dämpfungssysteme vermieden.

Weitere vorteilhafte Ausgestaltungen sind Gegenstand weiterer Unteransprüche und werden nachfolgend anhand von Zeichnungen näher erläutert.

Es zeigen:
- Figur 1: eine Seitenansicht einer Rollballenpresse mit geschlossenem Pressraumgehäuse und der erfindungsgemäßen Ver- und Entriegelungseinrichtung
- Figur 1a: eine Detailansicht der in Figur 1 abgebildeten Ver- und Entriegelungseinrichtung
- Figur 2: eine Detailansicht der in Figur 1 abgebildeten Mechanismus
- Figur 2a: eine Detailansicht der in Figur 2 abgebildeten Ver- und Entriegelungseinrichtung
- Figur 3: eine Seitenansicht einer Rollballenpresse mit geöffnetem Pressraumgehäuse
- Figur 3a: eine Detailansicht der in Figur 3 abgebildeten Ver- und Entriegelungseinrichtung
- Figur 4: eine Seitenansicht einer Rollballenpresse mit geschlossenem Pressraumgehäuse
- Figur 4a: eine Detailansicht der in Figur 4 abgebildeten Ver- und Entriegelungseinrichtung

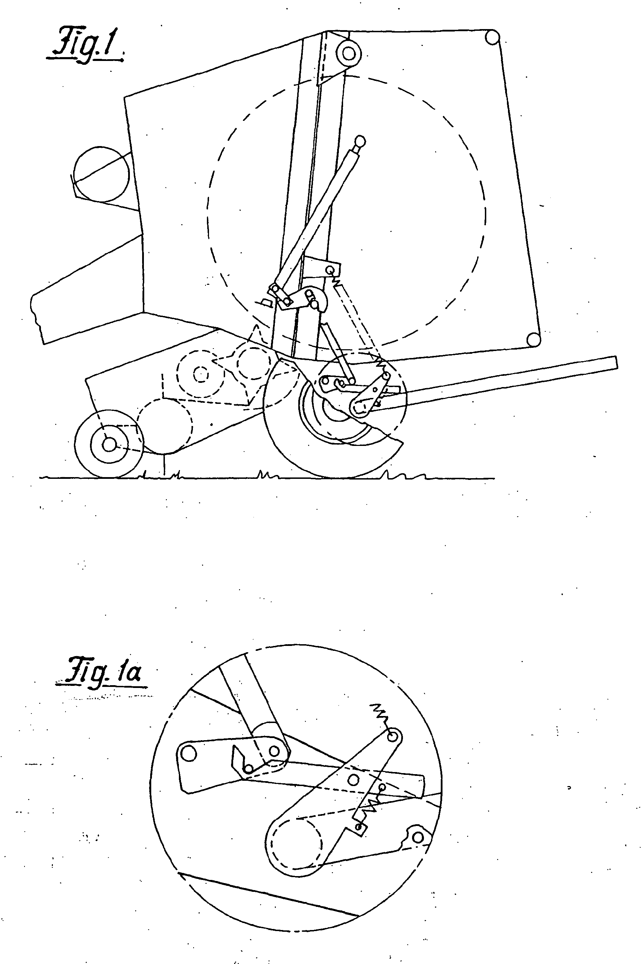

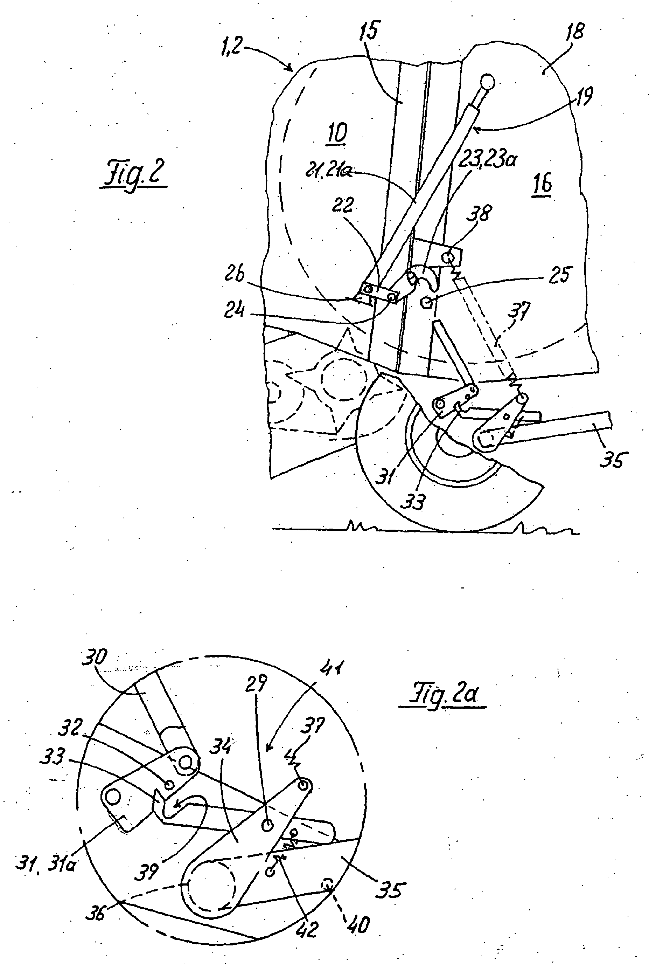

Figur 1 zeigt eine als Rollballenpresse 1 ausgeführte landwirtschaftliche Arbeitsmaschine 2 in der Seitenansicht und im geschlossenen Zustand. Die Rollballenpresse 1 steht auf Rädern 3 und wird an einem nicht dargestellten Zugfahrzeug angehängt und von diesem über das Feld gezogen. Mit der Aufnahmeeinrichtung 4 nimmt die Rollballenpresse 1 das Erntegut 5 vom Boden 6 auf und übergibt es an die nachfolgenden nur schematisch dargestellten Förder- und Schneidorgane 7. Diese Förder- und Schneidorgane 7 zerkleinern und führen das Erntegut 5 dem Pressraum 8 zu, in dem das Erntegut 5 in Rotationsbewegung versetzt zu einem Ballen 9 verdichtet wird. Der Pressraum 8 wird von einem zweiteiligen Gehäuse 10, 16 gebildet, dessen vorderer Gehäuseteil 10 ortsfest mit dem Pressenrahmen 15 verbunden ist. Der rückwärtige Gehäuseteil 16 ist als eine über eine Achse 17 nach oben hin verschwenkbare Klappe 18 ausgeführt.
Der vordere Gehäuseteil 10 und der rückwärtige Gehäuseteil 16 sind durch mindestens eine Kolbenzylindereinheit 19 miteinander verbunden, die außenseitig auf beiden Seiten der Rollballenpresse 1 angebracht sein kann. Im unteren Bereich des rückwärtige Gehäuseteils 16 ist eine schwenkbewegliche Ballenrampe 35 angeordnet, über die der fertig gepresste Ballen 9 aus dem Pressraum 8 der Rollballenpresse 1 hinausbefördert wird.
An dem rückwärtigen Gehäuseteil 16 ist außenseitig das freie Ende der Kolbenstange 20 der Kolbenzylindereinheit 19 schwenkbeweglich befestigt. Als dazugehöriges Verstellmittel 21 dient eine Kolbenzylindereinheit 19, wobei die Kolbenstange 20 an ihrem freien Ende beweglich mit einem Schwenkarm 22 verbunden, der seinerseits schwenkbar mit einem Antriebsglied 23 in Wirkverbindung steht. Im zugrundeliegenden Ausführungsbeispiel ist das Antriebsglied 23 als Klinke 23a ausgebildet. Der Schwenkarm 22 und die Klinke 23a sind an einer gemeinsamen am Pressenrahmen 8 ortsfest integrierten Achse 24 drehbar angeordnet. Im abgebildeten verschlossenen Zustand der Rollballenpresse 1 umfasst die Klinke 23a einen am rückwärtigen Gehäuseteil 16 angeordneten Zapfen 25. Auf diese Weise wird der rückwärtige Gehäuseteil 16 an den vorderen Gehäuseteil 10 bündig herangeschwenkt.

Die Klinke 23a ist durch eine Anlenkstange 30 mit einem weiteren Schwenkarm 31 verbunden. Dieser weitere Schwenkarm 31 nimmt einen Anschlag 32 auf, der im geschlossenen Zustand des rückwärtigen Gehäuseteils 16 von einen Fanghaken 33 zumindest teilweise umschlossen wird. Der Fanghaken 33 ist schwenkbeweglich über eine Achse 29 mit einem Hebel 34 verbunden. Der Hebel 34 wiederum ist mit der Ballenrampe 35 starr verbunden, wobei der Hebel 34 und die Ballenrampe 35 gemeinsam um eine Achse 36 verschwenkbar sind. An dem freien Ende des Hebels 34 ist eine Rückstellfeder 37 befestigt, die an einem festen Einhängepunkt 38 an dem Pressenrahmen 15 angeordnet ist. Die Rückstellfeder 37 dient dazu, die Ballenrampe 35 in ihrer oberen Endlage zu halten bzw. dahin zurückzuführen, nachdem der fertige Ballen 9 abgelegt worden ist. Die Ballenrampe 35 wird also nach dem Abrollen des Ballens 9 aufwärts geschwenkt. Im Gegensatz hierzu wird das Abwärtsschwenken der Ballenrampe 35 durch das Eigengewicht des Ballens 9 ausgelöst, sobald sich der fertige Ballen 9 auf der Ballenrampe 35 befindet.
Um das Aufwärts- und Abwärtsschwenken der Ballenrampe 35 zu gewährleisten, darf die Federkraft der Rückstellfedern 37 nicht zu hoch sein, da durch zu leichte Ballen 9 die Ballenrampe 35 unter Umständen nicht heruntergedrückt werden kann Und die Ballen 9 auf der Ballenrampe 35 liegen bleiben. Andererseits führt eine zu geringe Federkraft zu einem unkontrollierten Abrollen eines schweren Ballens 9.

In der Figur 1a ist die in der Figur 1 abgebildete Ver- und Entriegelungseinrichtung 41 vergrößert dargestellt. Der Fanghaken 33 umschließt den Anschlag 32. Zur Unterstützung dieses Verschließens ist der Fanghaken 33 durch eine Feder 42 mit dem Hebel 34 verbunden. Diese Feder 42 zieht das hintere Ende des Fanghakens 33 nach unten, wodurch die Aussparung 39 an den Anschlag 32 herangeführt und somit die feste Verbindung mit dem am Schwenkarm 31a hergestellt wird.

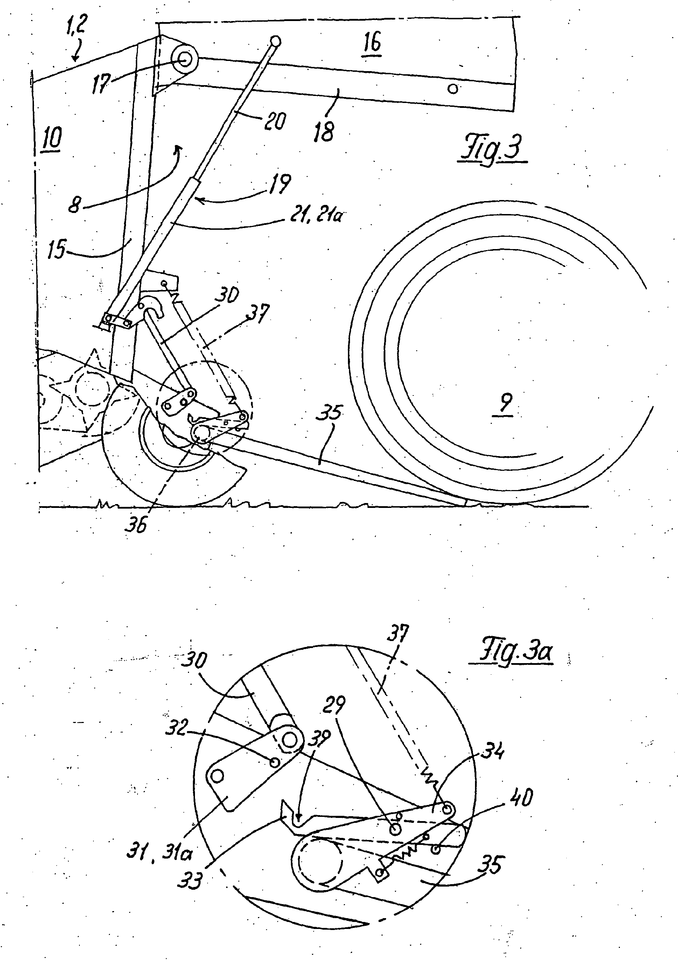

Die Figur 2 veranschaulicht einen Teilbereich der Rollballenpresse 1 unmittelbar bevor der rückwärtige Gehäuseteil 16 aufwärts geschwenkt wird. Die Kolbenstange 20 ist teilweise ausgefahren. Hierbei wird der Kolbenzylinder 21a auf einen Anschlag 26 gesteuert, wodurch der Kolbenzylinder 21a nicht weiter ausgelenkt werden kann. Durch das weitere Verfahren der Kolbenstange 20 wird der rückwärtige Gehäuseteil 16 aufwärts geschwenkt. Durch das vorherige Verfahren des Kolbenzylinders 21a wird der Schwenkarm 22 nach unten bewegt und die Klinke 23a um das entsprechende Maß nach oben bewegt. Durch das Verfahren der Kolbenstange 20 wird die Klinke 23a von dem Zapfen 25 losgelöst und der rückwärtige Gehäuseteils 16 wird zum Öffnen freigegeben, so dass der rückwärtige Gehäuseteil 16 um eine Schwenkachse 17 nach oben verschwenkt werden kann. Dieser Vorgang kann in an sich bekannter Weise automatisch durch die Übertragung eines Signals nach Beendigung des Bindevorganges oder auch manuell von dem Fahrer der landwirtschaftlichen Zugmaschine ausgelöst werden.

Die Figur 2a enthält eine Detailansicht der teilweise geöffneten Ver- und Entriegelungseinrichtung 41 aus der Figur 2. Sie zeigt wie sich der Anschlag 32 aus der Aussparung 39 des Fanghakens 33 herausbewegt. Der Fanghaken 33 bewegt sich hierbei kurvenförmig, wobei diese kurvenförmige Bewegung wird durch die Aufwärtsbewegung der Klinke 23a und der hiermit in Wirkverbindung stehenden Anlenkstange 30 verursacht wird. Die Anlenkstange 30 wiederum bewegt den mit ihr schwenkbeweglich verbundenen Schwenkarm 31a aufwärts, wodurch der an dem Schwenkarm 31 angeordneten Anschlag 32 aus der Aussparung 39 des Fanghakens 33 herausgeführt wird.

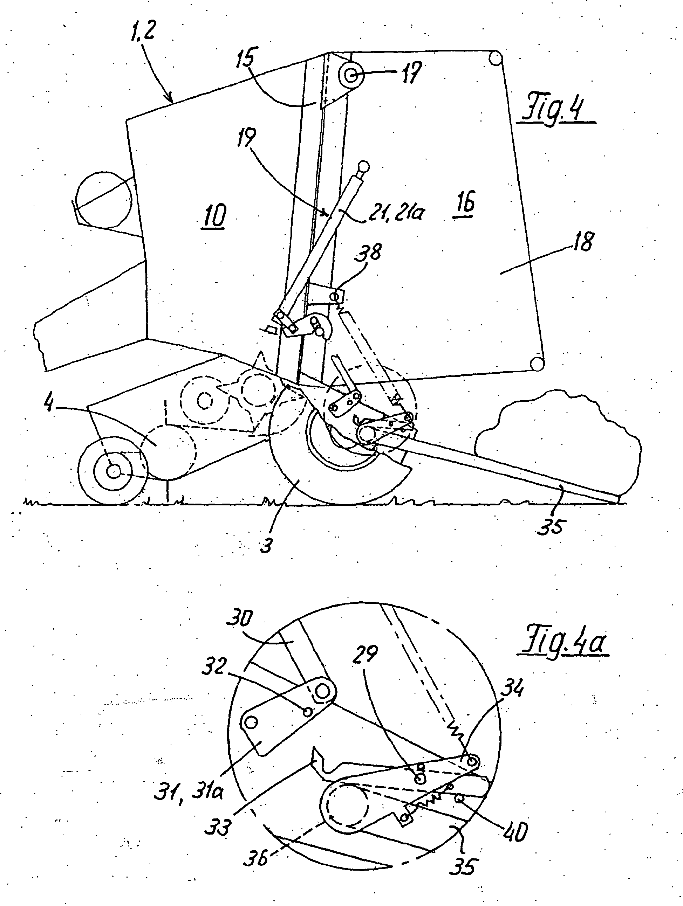

Wird nun der rückwärtige Gehäuseteil 16, wie in Figur 3 abgebildet, durch das Ausfahren der Kolbenstange 20 nach oben verschwenkt, wird auch der Schwenkarm 31a und die mit dem Schwenkarm 31 a verbundene Klinke 23a aufwärts geschwenkt. Durch die Aufwärtsbewegung der Klinke 23a wird zum einen die Klinke 23a von dem Zapfen 25 gelöst und die Anlenkstange 30 verfährt in die entsprechende Aufwärtsrichtung um das identische Maß wie die Klinke 23a. Hierdurch wird der mit der Anlenkstange 30 verbundene weitere Schwenkarm 22 um eine kurvenförmige Aufwärtsbewegung verschwenkt. Die Figur 3a stellt die Detailansicht dieses Vorgangs dar. Durch die kurvenförmige Aufwärtsbewegung wird der in dem Schwenkarm 22 integrierte Anschlag 32 aus der Aussparung 39 des Fanghakens 33 heraus geführt Hierdurch wird die feste Verbindung zwischen dem Fanghaken 33 und dem zuvor geschlossenen rückwärtigen Gehäuseteils 16 gelöst. Durch diesen Vorgang wird die Ballenrampe 35 entriegelt und kann durch den fertig gewickelten und aufliegenden Ballen 9 heruntergedrückt werden, so dass der fertige Ballen 9 über die Ballenrampe 35 aus der Rollballenpresse 1 herausrollen kann. Der Fanghaken 33 wird beim Herunterklappen der Ballenrampe 35 an einen Anschlag 40 geführt. Durch diesen Anschlag 40 wird der Fanghaken 33 in seiner Position fixiert. Die Feder 42 hat sodann keinen Einfluss mehr auf die Lage des Fanghakens 33. Wird der rückwärtige Gehäuseteil 16 nunmehr von der aufgeschwenkten Position in die geschlossene Position - wie in Figur 1 - geschwenkt, so ist es erfindungswesentlich, dass der Anschlag 32 in die Aussparung 39 des Fanghakens 33 verfährt. Hierfür muss der Fanghaken 33 eine bestimmte Position einnehmen, die durch den Anschlag 40 definiert wird. Auf diese Weise wird der Schließvorgang des rückwärtigen Gehäuseteils 16 mit der Aufwärtsbewegung der Ballenrampe 35 derart abgestimmt, dass Fanghaken 33 und Anschlag 32 einriegeln. Ohne den Anschlag 40 würde sich der Fanghaken 33 bei heruntergefahrenem rückwärtigen Gehäuseteil 16 und hochschnellender Ballenrampe 35 an dem Anschlag 32 vorbei bewegen, ohne dass es zu einer Verriegelung der Ballenrampe 35 käme.
Sobald der Ballen 9 von der Ballenrampe 35 abgerollt ist, wird die Ballenrampe 35 nach oben gezogen. Nach dem Herausrollen des Ballens 9 aus der Rollballenpresse1 wird der rückwärtige Gehäuseteil 16 wieder verschlossen und durch das Einfahren der Kolbenstange 20 an den vorderen Gehäuseteil 10 bündig herangeschwenkt. Hierbei umschließt die Klinke 23a den feststehenden Zapfen 25, Welcher in Höhe der Klinke 23a an dem rückwärtigen Gehäuseteil 16 angeordnet ist. Durch das Hinaufschnellen der Ballenrampe 35 wird auch der Fanghaken 33 aufwärts bewegt bis der Fanghaken 35 und der Anschlag 32 des Schwenkarms 31 a einrasten. Auf diese Weise erfolgt die feste Verriegelung der Ballenrampe 35. Ein unkontrolliertes Auf- und Abklappen der Ballenrampe 35 gegen das Pressengehäuse 10, 16 ist nunmehr während des Erntevorgangs und auch während der Straßenfahrt nicht mehr möglich. Insgesamt entspricht dieser abgeschlossene Vorgang der in Abbildung 1 dargestellten Ausgangsstellung.

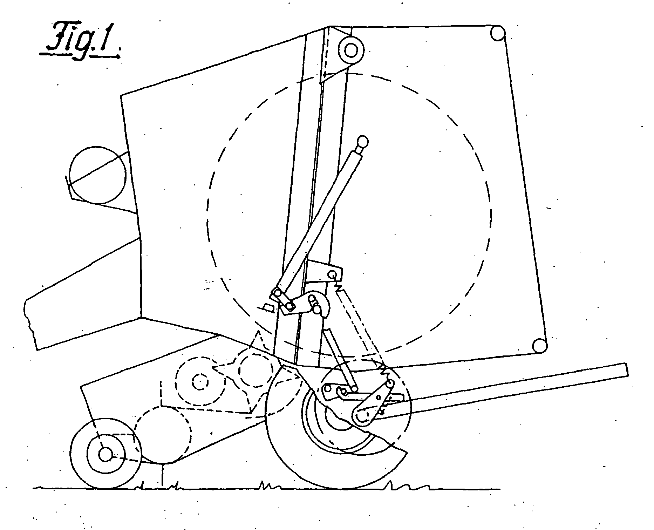

In der Abbildung 4 ist der rückwärtige Gehäuseteil 16 an den vorderen Gehäuseteil 10 bündig herangeschwenkt. In diese Arbeitsstellung umschließt die Klinke 23a den Zapfen 25, wodurch eine feste Verbindung zwischen dem vorderen und rückwärtigen Gehäuseteil 16 hergestellt wurde. Im Verlauf des Wickelprozesses kann es jedoch geschehen, dass kleinere Ballen 9 oder Teile des Ernteguts 5 auf der Ballenrampe 35 liegen bleiben. Hierdurch verbleibt die Ballenrampe 35 in der unteren Position trotz geschlossenem Pressengehäuse 10, 16. Die Position des Fanghakens 33 stimmt hierbei mit der in Figur 3a abgebildeten Position überein.

Wie aus der Figur 4a ersichtlich, ist der Schwenkarm 31a im Unterschied zur Figur 3/3a nunmehr in einer abgesenkten Stellung. Die Lage des Fanghakens 33 ist hingegen, verglichen mit der Figur 3a, identisch. Aufgrund der zuvor beschriebenen und durch den Anschlag 40 bestimmten Position des Fanghakens 33 ist eine Verriegelung auch bei bereits heruntergeschwenktem rückwärtigen Gehäuseteil 16 möglich. Beim Hochschwenken der Ballenrampe 35 wird gleichermaßen der Fanghaken 33 verschwenkt. Hierbei wird der Fanghaken 33 an den Anschlag 32 herangeführt. Dabei verfährt die Aussparung 39 des Fanghakens um den bereits in seiner Endposition stehenden Anschlag 32. Sobald die Aussparung 39 den Anschlag 32 umschlossen hat, ist die Ballenrampe 35 verriegelt und fixiert.

Die Erfindung ist nicht nur auf Rollballenpressen 1 ,sondern auf landwirtschaftliche Erntemaschinen 2 beliebiger Art anwendbar.

### Bezugszeichenliste:

- 1: Rollballenpresse
- 2: Landwirtschaftliche
Arbeitsmaschine
- 3: Räder
- 4: Aufnahmeeinrichtung
- 5: Erntegut
- 6: Boden
- 7: Förder- und Schneidorgane
- 8: Pressraum
- 9: Ballen
- 10: Vorderer Gehäuseteil
- 15: Pressenrahmen
- 16: Rückwärtiger Gehäuseteil
- 17: Achse
- 18: Verschwenkbare Klappe
- 19: Kolbenzylindereinheit
- 20: Kolbenstange
- 21: Verstellmittel
- 21a: Kolbenzylinder
- 22: Schwenkarm
- 23: Antriebsglied
- 23a: Klinke
- 24: Achse
- 25: Zapfen
- 26: Anschlag
- 29: Achse
- 30: Anlenkstange
- 31: Antriebsglied
- 31a: Schwenkarm
- 32: Anschlag
- 33: Fanghaken
- 34: Hebel
- 35: Ballenrampe
- 36: Achse
- 37: Rückstellfeder

- 38: Einhängepunkt
- 39: Aussparung
- 40: Anschlag
- 41: Ver- und Entriegelungseinrichtung
- 42: Feder

## Patentansprüche

1. Verfahren zur Verriegelung und Entriegelung einer lageveränderbaren Ballenrampe an einer Rollballenpresse, deren Pressraum von einem mehrteiligen Pressraumgehäuse umgeben ist, wobei ein Teil des Pressraumgehäuses aus zumindest einer schwenkbaren Klappe ausgebildet ist, die mittels unterschiedlicher Elemente, mit der Ballenrampe in Wirkverbindung steht ,
**dadurch gekennzeichnet, dass**
die Verriegelung der Ballenrampe (35) durch wenigstens einen Fanghaken (33) erfolgt, sobald die zumindest eine schwenkbare Klappe (18) geschlossen ist.

2. Verfahren zur Verriegelung und Entriegelung einer Ballenrampe nach Anspruch 1,
**dadurch gekennzeichnet, dass**
die Verriegelung der Ballenrampe (35) im unbelasteten Zustand der Ballenrampe (35) und die Entriegelung der Ballenrampe (35) im belasteten Zustand der Ballenrampe (35) erfolgt.

3. Verfahren zur Verriegelung und Entriegelung einer Ballenrampe nach einem oder mehreren der vorangegangenen Ansprüche,
**dadurch gekennzeichnet, dass**
die Entriegelung der Ballenrampe (35) in Abhängigkeit von dem Aufschwenken der zumindest einen schwenkbaren Klappe (18) erfolgt.

4. Verfahren zur Verriegelung und Entriegelung einer Ballenrampe nach einem oder mehreren der vorangegangenen Ansprüche,
**dadurch gekennzeichnet, dass**
die Verriegelung und die Entriegelung der Ballenrampe (35) selbsttätig erfolgt.

5. Ver- und Entriegelungseinrichtung für eine Rollballenpresse, deren Pressraum von einem mehrteiligen Gehäuse umgeben ist, wobei ein Teil des Pressraumgehäuses als schwenkbare Klappe ausgebildet ist, die mittels unterschiedlicher Elemente, mit einer Ballenrampe in Wirkverbindung steht,
**dadurch gekennzeichnet, dass**
der Ballenrampe (35) zumindest ein Fanghaken (33) zugeordnet ist, der ver- und entriegelbar mit wenigstens einem Ver- und Entriegelungsmechanismus (23, 30, 31) in Wirkverbindung steht, wobei ein Glied (23) des Ver- und Entriegelungsmechanismus (23, 30, 31) an die Bewegung der wenigstens einen schwenkbaren Klappe (16) des Pressraumgehäuses (10, 16) gekoppelt ist.

6. Ver- und Entriegelungseinrichtung nach Anspruch 5,
**dadurch gekennzeichnet, dass**
der Fanghaken (33) um eine Schwenkachse (29) drehbar mit der Ballenrampe (35) in Wirkverbindung steht und gegen die Wirkung einer Feder (42) verschwenkbar ist wobei die Schwenkbewegung des Fanghakens (33) durch wenigstens einen Anschlag (40) begrenzt wird.

7. Ver- und Entriegelungseinrichtung nach einem oder mehreren der Ansprüche 5-6,
**dadurch gekennzeichnet, dass**
dem Fanghaken (33) einenends eine Aussparung (39) angeformt ist über die der Fanghaken (33) mit zumindest einem Glied (31) des Entriegelungsmechanismus (23, 30, 31) in Wirkverbindung steht.

8. Ver- und Entriegelungseinrichtung einem oder mehreren der Ansprüche 5-7,
**dadurch gekennzeichnet, dass**
der Ver- und Entriegelungsmechanismus (31, 30, 23) als Gelenksmechanismus ausgebildet ist, dessen Antriebsglied (23) schwenkbeweglich am Pressenrahmen (15) der Rollballenpresse (1) angeordnet ist, wobei das Antriebsglied (23) über ein Koppelglied (30) gelenkig mit dem den Pressenrahmen (15) der Rollballenpresse (1) schwenkbeweglich angeordneten Antriebsglied (31) verbunden ist.

9. Ver- und Entriegelungseinrichtung nach einem oder mehreren der Ansprüche 5-8,
**dadurch gekennzeichnet, dass**
das als Klinke (23a) ausgeführte Antriebsglied (23) als Ver- und Entriegelungsmechanismus (23, 30, 31) an die Bewegung der Ballenrampe (35) gekoppelt ist und in geschlossener Stellung der Ballenrampe (35) zumindest einen an der Ballenrampe (35) angeordneten Zapfen (25) umgreift.

10. Ver- und Entriegelungseinrichtung nach einem oder mehreren der Ansprüche 5-9,
**dadurch gekennzeichnet, dass**
das Antriebsglied (23) an die Bewegung eines als Kolbenzylindereinheit (19) ausgeführten Verstellmittels (21) gekoppelt ist.

11. Ver- und Entriegelungseinrichtung nach einem oder mehreren der Ansprüche 5-10,
**dadurch gekennzeichnet, dass**
dem Verstellmittel (21) ein Anschlag (26) so zugeordnet ist, dass beim Auflaufen des Verstellmittels (21) auf den Anschlag (26) die mit dem Verstellmittel (21) verbundene Klinke (23a) als Entriegelungsmechanismus (23, 30, 31) den Anschlag (40) der verschwenkbaren Ballenrampe (35) freigibt.

## Claims

1. A method of locking and unlocking a variable-position bale ramp on a round bale press whose pressing chamber is surrounded by a multi-part pressing chamber housing, wherein a part of the pressing chamber housing is formed by at least one pivotable flap which is operatively connected to the bale ramp by means of different elements,
**characterised in that**
locking of the bale ramp (35) is effected by at least one catch hook (33) as soon as the at least one pivotable flap (18) is closed.

2. A method of locking and unlocking a bale ramp according to claim 1 **characterised in that** locking of the bale ramp (35) is effected in the unloaded condition of the bale ramp (35) and unlocking of the bale ramp (35) is effected in the loaded condition of the bale ramp (35).

3. A method of locking and unlocking a bale ramp according to one or more of the preceding claims **characterised in that** unlocking of the bale ramp (35) is effected in dependence on the upward pivotal movement of the at least one pivotable flap (18).

4. A method of locking and unlocking a bale ramp according to one or more of the preceding claims **characterised in that** locking and unlocking of the bale ramp (35) is effected automatically.

5. A locking and unlocking apparatus for a round bale press whose pressing chamber is surrounded by a multi-part housing, wherein a part of the pressing chamber housing is in the form of a pivotable flap which is operatively connected to a bale ramp by means of different elements,
**characterised in that**
associated with the bale ramp (35) is at least one catch hook (33) which is lockably and unlockably operatively connected to at least one locking and unlocking mechanism (22, 30, 31), wherein a member (23) of the locking and unlocking mechanism (23, 30, 31) is coupled to the movement of the at least one pivotable flap (16) of the pressing chamber housing (10, 16).

6. A locking and unlocking apparatus according to claim 5 **characterised in that** the catch hook (33) is operatively connected to the bale ramp (35) rotatably about a pivot axis (29) and is pivotable against the action of a spring (42), wherein the pivotal movement of the catch hook (33) is limited by at least one abutment (40).

7. A locking and unlocking apparatus according to one or more of claims 5 and 6 **characterised in that** formed at one end on the catch hook (33) is a recess (39), by way of which the catch hook (33) is operatively connected to at least one member (31) of the unlocking mechanism (23, 30, 31).

8. A locking and unlocking apparatus according to one or more of claims 5 to 7 **characterised in that** the locking and unlocking mechanism (31, 30, 23) is in the form of a link mechanism whose drive member (23) is pivotably movably arranged on the press frame (15) of the round bale press (1), wherein the drive member (23) is connected hingedly by way of a coupling member (30) to the drive member (31) arranged pivotably movably on the press frame (15) of the round bale press (1).

9. A locking and unlocking apparatus according to one or more of claims 5 to 8 **characterised in that** the drive member (23) which is in the form of a pawl (23a) is coupled as the locking and unlocking mechanism (23, 30, 31) to the movement of the bale ramp (35) and in the closed position of the bale ramp (35) embraces at least one projection (25) arranged on the bale ramp (35).

10. A locking and unlocking apparatus according to one or more of claims 5 to 9 **characterised in that** the drive member (23) is coupled to the movement of a displacement means (21) in the form of a piston-cylinder unit (19).

11. A locking and unlocking apparatus according to one or more of claims 5 to 10 **characterised in that** an abutment (26) is so associated with the displacement means (21) that when the displacement means (21) passes on to the abutment (26) the pawl (23a) connected to the displacement means (21) as the unlocking mechanism (23, 30, 31) releases the abutment (40) of the pivotable bale ramp (35).

## Revendications

1. Procédé de verrouillage et de déverrouillage d'une rampe à balles à position variable dans une presse à balles rondes dont la chambre de compression est close par un carter de chambre de compression en plusieurs parties, une partie du carter de chambre de compression étant formée par au moins un volet pivotant qui, par l'intermédiaire de différents éléments, est en liaison active avec la rampe à balles, **caractérisé en ce que** le verrouillage de la rampe à balles (35) est effectué par au moins un crochet d'arrêt (33) dès que ledit volet pivotant au nombre d'au moins un (18) est fermé.

2. Procédé de verrouillage et de déverrouillage d'une rampe à balles selon la revendication 1, **caractérisé en ce que** le verrouillage de la rampe à balles (35) s'effectue lorsque la rampe à balles (35) n'est pas chargée et le déverrouillage de la rampe à balles (35) s'effectue lorsque la rampe à balles (35) est chargée.

3. Procédé de verrouillage et de déverrouillage d'une rampe à balles selon une ou plusieurs des revendications précédentes, **caractérisé en ce que** le déverrouillage de la rampe à balles (35) s'effectue en fonction du pivotement dudit volet pivotant au nombre d'au moins un (18).

4. Procédé de verrouillage et de déverrouillage d'une rampe à balles selon une ou plusieurs des revendications précédentes, **caractérisé en ce que** le verrouillage et le déverrouillage de la rampe à balles (35) s'effectuent automatiquement.

5. Dispositif de verrouillage et de déverrouillage pour une presse à balles rondes dont la chambre de compression est close par un carter en plusieurs parties, une partie du carter de chambre de compression étant formée d'un volet pivotant qui, par l'intermédiaire de différents éléments, est en liaison active avec une rampe à balles, **caractérisé en ce qu'**à la rampe à balles (35) est associé au moins un crochet d'arrêt (33) qui est en liaison active de manière verrouillable et déverrouillable avec au moins un mécanisme de verrouillage et de déverrouillage (23, 30, 31), un organe (23) du mécanisme de verrouillage et de déverrouillage (23, 30, 31) étant couplé au mouvement dudit volet pivotant au nombre d'au moins un (16) du carter de chambre de compression (10, 16).

6. Dispositif de verrouillage et de déverrouillage selon la revendication 5, **caractérisé en ce que** le crochet d'arrêt (33) est en liaison active avec la rampe à balles (35) en pouvant tourner autour d'un axe de pivotement (29) et peut pivoter à l'encontre de l'effet d'un ressort (42), le mouvement de pivotement du crochet d'arrêt (33) étant limité par au moins une butée (40).

7. Dispositif de verrouillage et de déverrouillage selon une ou plusieurs des revendications 5 et 6, **caractérisé en ce que** le crochet d'arrêt (33) comporte à l'une de ses extrémités un évidement (39) par l'intermédiaire duquel le crochet d'arrêt (33) coopère avec au moins un organe (31) du mécanisme de déverrouillage (23, 30, 31).

8. Dispositif de verrouillage et de déverrouillage selon une ou plusieurs des revendications 5 à 7, **caractérisé en ce que** le mécanisme de verrouillage et de déverrouillage (23, 30, 31) est conformé en mécanisme articulé dont l'organe d'entraînement (23) est monté à pivotement sur le bâti de presse (15) de la presse à balles rondes (1), l'organe d'entraînement (23) étant relié de manière articulée, par l'intermédiaire d'un organe de couplage (30), à l'organe d'entraînement (31) monté à pivotement sur le bâti de presse (15) de la presse à balles rondes (1).

9. Dispositif de verrouillage et de déverrouillage selon une ou plusieurs des revendications 5 à 8, **caractérisé en ce que** l'organe d'entraînement (23), conformé en cliquet (23a) pour faire fonction de mécanisme de verrouillage et de déverrouillage (23, 30, 31) est couplé au mouvement de la rampe à balles (35) et, dans la position de fermeture de la rampe à balles (35), enserre au moins un tourillon (25) monté sur la rampe à balles (35).

10. Dispositif de verrouillage et de déverrouillage selon une ou plusieurs des revendications 5 à 9, **caractérisé en ce que** l'organe d'entraînement (23) est couplé au mouvement d'un moyen de positionnement (21) conformé en ensemble piston-cylindre (19).

11. Dispositif de verrouillage et de déverrouillage selon une ou plusieurs des revendications 5 à 10, **caractérisé en ce que** le moyen de positionnement (21) est associé à une butée (26) de manière que, lorsque le moyen de positionnement (21) s'allonge et vient contre la butée (26), le cliquet (23a) relié au moyen de positionnement (21) fait fonction de mécanisme de déverrouillage (23, 30, 31) et libère la butée (40) de la rampe à balles mobile (35).
